# EUROPÄISCHE PATENTSCHRIFT

(11) **EP 2 449 346 B1**
(45) Veröffentlichungstag und Bekanntmachung des Hinweises auf die Patenterteilung: **06.04.2016**
(21) Anmeldenummer: 10731488.2
(22) Anmeldetag: 28.06.2010
(51) Int. Cl.: B62D 15/02, G01D 5/245

(54) **WINKELSENSOR**
ANGLE SENSOR
CAPTEUR ANGULAIRE

(30) Priorität: 29.06.2009 DE 102009031176
(43) Veröffentlichungstag der Anmeldung: 09.05.2012
(73) Patentinhaber: Leopold Kostal GmbH & Co. KG, 58513 Lüdenscheid (DE)
(72) Erfinder: DEITMERG, Martin, 58507 Lüdenscheid (DE); HIRSCHFELD, Klaus, 58515 Lüdenscheid (DE); RUTKOWSKI, Marco, 59379 Selm-Bork (DE); VOM HEDT, Bernd, 58093 Hagen (DE); GARNEYER, Stefan, 58093 Hagen (DE); KOBER, Sven, 47800 Krefeld (DE); SCHIRP, Christian, 44789 Bochum (DE); HASSELMANN,Holger, 45279 Essen (DE); MAIER, Oliver, 57439 Attendorn (DE); SCHRÖDER, Stefan, 58509 Lüdenscheid (DE)
(86) Internationale Anmeldenummer: PCT/EP2010/059139
(87) Internationale Veröffentlichungsnummer: WO 2011/000803

(56) Entgegenhaltungen:
- DE-A1- 10 110 785
- DE-A1-102004 004 025
- DE-A1-102007 010 737
- DE-A1-102008 059 775

## Beschreibung

Die Erfindung betrifft einen Winkelsensor zur Ermittlung des absoluten Drehwinkels einer Welle über mehrere Umdrehungen, mit einer äußeren Sensorik mit mindestens einem Sensorrad und einem dem Sensorrad zugeordneten Sensor zur Bestimmung der Umdrehungszahl der Welle, und mit einer inneren Sensorik mit einem direkt mit der Welle verbundenen weiteren Sensorrad, das eine in Umfangsrichtung angeordnete Codierung aufweist, aus der ein weiterer Sensor eine relative Winkelposition innerhalb einer Umdrehung der Welle erfasst, wobei das weitere Sensorrad in Umfangsrichtung nebeneinander liegende Messsektoren aufweist, und wobei der weitere Sensor die relative Winkelposition der Welle bezüglich eines Messsektors ermittelt, wobei der absolute Drehwinkel der Welle aus den Messwerten der inneren Sensorik und äußeren Sensorik bestimmbar ist.

Die deutsche Offenlegungsschrift DE 10 2007 010 737 A1 zeigt eine Vorrichtung zur Erfassung des absoluten Drehwinkels einer Welle mit einem mit der Welle drehgekoppelten Hauptrotor und mit einem von dem Hauptrotor angetriebenen Nebenrotor, wobei dem Nebenrotor eine Nebenrotorsensorik zugeordnet ist, die den absoluten Drehwinkel des Nebenrotors erfasst, wobei dem Hauptrotor eine Hauptrotorsensorik zugeordnet ist, die die Drehstellung des Hauptrotors in diskreten Winkelintervallen erfasst, wobei jedem Winkelintervall zur Erfassung einer Drehstellung des Hauptrotors innerhalb mindestens eines bestimmten Winkelintervalls eine eigene Sensoreinheit zugeordnet ist.

Aus der DE 10 2008 059 775 A1 ist eine Winkelsensoranordnung zur Messung des Drehwinkels einer Welle bekannt, mit einem definierten Drehwinkelmessbereich, von insbesondere mehr als 360°, umfassend ein erstes Zahnrad und einen ersten magnetischen Encoder mit wenigstens einer Encoderspur, umfassend ein oder mehrere Polpaare, wobei sich das erste Zahnrad und der erste magnetische Encoder mit der Welle drehen und ein zweites Zahnrad und einen zweiten magnetischen Encoder mit wenigstens einer Encoderspur, umfassend ein oder mehrere Polpaare, wobei sich der zweite Encoder mit dem zweiten Zahnrad dreht und das erste und das zweite Zahnrad zusammenwirken und wobei dem ersten Encoder und dem zweiten Encoder jeweils zumindest ein Magnetfeldsensorelement zugeordnet sind, wobei das erste und zweite Zahnrad bezüglich ihres gemeinsamen Übersetzungsverhältnisses und der erste und zweite magnetische Encoder bezüglich ihrer Pol-Anzahlen so ausgebildet sind, dass das dem ersten oder dem zweiten Encoder zugeordnete Magnetfeldsensorelement bezogen auf den gesamten Drehwinkelmessbereich der Winkelsensoranordnung n Pole oder Polpaare erfasst und das dem zweiten oder dem ersten Encoder zugeordnete Magnetfeldsensorelement bezogen auf den gesamten Drehwinkelmessbereich der Winkelsensoranordnung n-1+Delta Pole oder Polpaare erfasst, wobei Delta als reelle Zahl zwischen 0 und 1, und n als natürliche Zahl definiert ist.

Für verschiedene Anwendungszwecke, wie zum Beispiel die Realisierung eines hochwertigen direkt angetriebenen Lenkungsaktuators für den Einsatz in einem Steer-by-wire System eines Fahrzeugs, der sich am oberen Ende der Lenksäule in Fahrernähe befindet, wird eine besonders hochauflösende Winkelsensorik hinsichtlich zeitlicher Abtastung und Winkelauflösung benötigt, damit die Aktuatorregelung feinste Winkel- und damit Momentänderungen realisieren kann. Hohe Anforderungen an die Regelgüte schließen eine Sensorik mit Hysterese im Bereich der Winkelauflösung aus. Hierdurch ist die Verwendung rein getrieblich angebundener Messtechniken problematisch.

Wenn man einen Lenkungsaktuator in einem Steer-By-Wire System einsetzen will, bei dem keine permanente Verbindung zwischen Lenkrad/Lenkaktuator und der Lenkungskinematik besteht, und damit auch kein Überdrehschutz der üblicherweise zur Verbindung der elektrischen Komponenten im Lenkrad mit dem Fahrzeug eingesetzten Wickelfederkassette, ist es notwendig, einen absoluten Messbereich abzudecken, der mehrere Umdrehungen des Aktuators umfasst.

Der in der deutschen Patentschrift DE 101 10 785 C2 beschriebene Lenkwinkelsensor weist ein von einer Lenkwelle übersetzt angetriebenes Zählrad mit einer magnetischen Codierung auf. Diese Codierung wird von mehreren Magnetfeldsensoren erfasst. Aus den sinus- und cosinusförmigen Ausgangssignalen der Magnetfeldsensoren ist die Umdrehungszahl) des Zählrads und damit der Lenkwelle bestimmbar. Des Weiteren ist eine von der Lenkwelle direkt angetriebene Codescheibe vorgesehen, deren Codierung von einer Abtasteinheit erfasst wird, woraus die Winkelstellung der Codescheibe innerhalb einer Umdrehung bestimmbar ist. Der absolute Drehwinkel des Lenkwinkelsensors ist durch die gemeinsame Auswertung der Sensorinformationen des Zählrades und der Codescheibe ermittelbar. Die erreichbare Genauigkeit der Winkelerfassung ist dabei wesentlich von der auf der Codescheibe aufgebrachten Codierung abhängig. Zu einer vorteilhaften Ausgestaltung der Codierung der Codescheibe finden sich in diesem Dokument keine näheren Angaben.

Ein gattungsgemäßer Winkelsensor ist aus der deutschen Offenlegungsschrift DE 10 2004 004 025 A1 bekannt. Der darin beschriebene Winkelsensor weist einen Drehkörper auf und einen Rotor auf, die jeweils in Umfangsrichtung Magnetsektoren mit wechselnder Polarität aufweisen. Der Rotor ist mit einer Welle drehsynchron gekoppelt und treibt über eine Verzahnung den Drehkörper an, wobei zwischen dem Rotor und dem Drehkörper ein nicht ganzzahliges Übersetzungsverhältnis besteht. Aus den von Positionen der Magnetsensoren erfassten Positionen von Drehkörper und Rotor werden nach dem Noniusprinzip der absolute Drehwinkel des Rotors ermittelt.

Das Noniusprinzip setzt unterschiedlich geteilte Messskalen zueinander in Beziehung um eine verbesserte Auflösung oder einen vergrößerten Messbereich, bei Winkelsensoren etwa eine absolute Erfassung über mehrere Umdrehungen zu erhalten. Dabei dürfen sich die Teilungen der Skalen allerdings nicht zu sehr unterscheiden, damit das Ergebnis eindeutig bleibt. Hierdurch wird die erreichbare Messgenauigkeit begrenzt.

Es stellte sich die Aufgabe, einen Winkelsensor zu schaffen, der auf einfache und kostengünstige Weise eine sehr hohe Winkelauflösung über einen Messbereich von mehreren Umdrehungen hysteresefrei verwirklicht.

Diese Aufgabe wird erfindungsgemäß dadurch gelöst, dass die äußere Sensorik mehrere durch das weitere Sensorrad angetriebene Sensorräder und Sensoren aufweist und den aktuell von dem weiteren Sensor erfassten Messsektor nach dem Noniusprinzip bestimmt.

Vorgesehen ist somit eine absolut messende äußere Sensorik, die mehrere Sensorräder und Sensoren aufweist, und den aktuell von dem weiteren Sensor erfassten Messsektor nach dem Noniusprinzip bestimmt. Die äußere Sensorik ist dabei ausreichend genau genug ausgebildet, um über mehrere Umdrehungen den aktuell von dem weiteren Sensor erfassten Messsektor weiteren Sensorrads zu bestimmen, das heißt, die äußere Sensorik bestimmt über einen relativ großen Winkelbereich von mehreren Umdrehungen einen absoluten Drehwinkel mit einer relativ geringen Winkelauflösung. Dieser relativ grobe Messwert wird durch die besonders hochauflösend messende innere Sensorik verfeinert, was dadurch unterstützt wird, dass das weitere Sensorrad direkt, das heißt schlupffrei, mit der Welle verbunden ist. Durch das Zusammenwirken der äußeren und der inneren Sensorik ergibt sich insgesamt eine hohe und hysteresefreie Winkelauflösung über einen großen Winkelbereich.

Besonders vorteilhafte Ausgestaltungen und Weiterbildungen der Erfindung ergeben sich aus den abhängigen Ansprüchen sowie der nachfolgenden Beschreibung eines anhand der Zeichnung dargestellten Ausführungsbeispiels. Es zeigen:
- Figur 1: eine erste schematische Ansicht eines Winkelsensors,
- Figur 2: eine zweite schematische Ansicht des Winkelsensors,
- Figur 3: ein Anwendungsbeispiel des Winkelsensors.

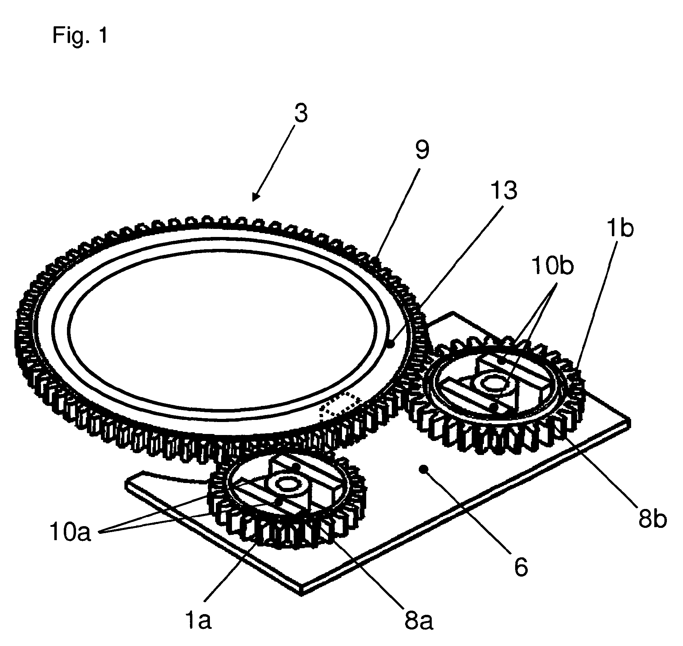

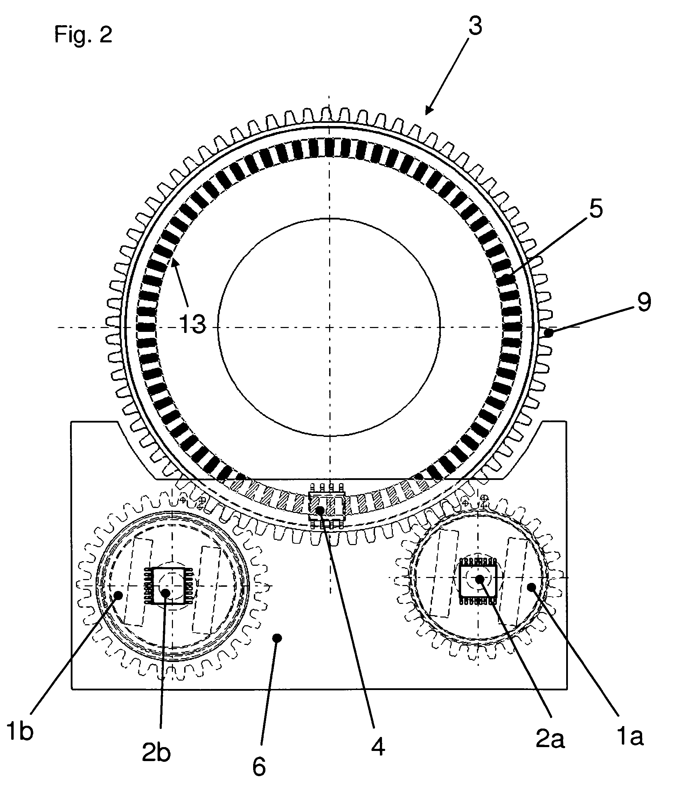

In den Figuren 1 und 2 sind wesentliche Teile eines erfindungsgemäßen Winkelsensors schematisch dargestellt. Der Winkelsensor besteht aus zwei drehbar angeordneten Sensorrädern (1a, 1b), welche als Zahnräder ausgebildet sind. Die Sensorräder (1a, 1 b) weisen innerhalb ihrer Zahnkränze (8a, 8b) Magnete (10a, 10b) auf, deren Drehstellungen von Sensoren (2a, 2b), erfasst werden, die auf einem gemeinsamen Schaltungsträger 6 angeordnet sind. Die Zahnkränze (8a, 8b) sind mit dem Zahnkranz 9 eines weiteren Sensorrades 3 in Eingriff, welches durch eine, in den Figuren 1 und 2 nicht dargestellte Weile angetrieben wird. Bei einer Drehung der Welle drehen sich somit die drei Sensorräder (1a, 1 b, 3) gemeinsam.

Da die Zahnkränze (8a, 8b) der Sensorräder (1a, 1b) eine unterschiedliche Anzahl von Zähnen aufweisen, werden sie bei einer Drehung der Welle durch den Zahnkranz 9 des weiteren Sensorrads 3 um unterschiedliche Winkelbeträge verdreht. Auf bekannte Weise kann durch eine gemeinsame Auswertung der Winkelbeträge nach dem Noniusprinzip, wie etwa in der EP 0 877 916 B1 beschrieben, der absolute Drehwinkel der Welle über mehrere Umdrehungen bestimmt werden. Allerdings ist das erreichbare Auflösungsvermögen des Winkelsensors begrenzt, und zwar insbesondere durch das zwischen den Zahnkränzen (8a, 8b, 9) auftretende Spiel und die Formtoleranzen der Verzahnung und Lagerung der Räder.

Zur Schaffung eines besonders hochauflösenden und hysteresefrei messenden Winkelsensors ist erfindungsgemäß vorgesehen, dass das weitere Sensorrad 3 in Umfangsrichtung eine Anzahl von nebeneinander liegende Messsektoren 5 aufweist, und dass der weitere Sensor 4 die relative Winkelposition der Welle bezüglich eines Messsektors 5 ermittelt.

Die Figur 2 zeigt die Rückseite der in der Figur 1 dargestellten Anordnung. Die drei Sensorräder (1 a, 1 b, 3) befinden sich unterhalb des Schaltungsträgers 6, auf dem drei in integrierter Schaltungstechnik ausgeführte Sensoren (2a, 2b, 4) erkennbar sind, wobei Sensor 4 vorteilhaft auf der dem Magnetring 13 zugewandten Seite angeordnet ist. Auf eine Darstellung weiterer mit den Sensoren (2a, 2b, 4) zusammenwirkender elektronischer Schaltungsteile und Leiterbahnstrukturen wurde zugunsten einer übersichtlichen Darstellung verzichtet.

Die Figur 2 verdeutlicht zudem die Anordnung der Messsektoren 5 auf dem weiteren Sensorrad 3. In Umfangssrichtung des weiteren Sensorrads 3 sind abwechselnd magnetische Nord- und Südpole angeordnet, die in der Figur 2 durch schwarze und weiße Abschnitte symbolisch dargestellt sind. Ein Messsektor 5 wird dabei durch jeweils ein Magnetpolpaar gebildet. Da in der Umgebung der Magnetpole der Feldvektor kontinuierlich seine Richtung ändert, kann die Position von zwei nebeneinander liegenden Magnetpolen relativ zu dem weiteren Sensor 4 mittels einer Messung der magnetischen Flussdichte oder der Feldrichtung durch den weiteren Sensor 4 mit hoher Genauigkeit bestimmt werden. Der erfasste Analogwert wird danach, vorzugsweise direkt durch den weiteren Sensor 4, in einen Digitalwert gewandelt.

Da der weitere Sensor 4 keine absolute Winkelmessung ermöglicht, wird der absolute Drehwinkel der Welle mit geringerer Genauigkeit durch die äußere Sensorik, dass heißt durch die Sensorräder 1 a und 1 b und die zugehörigen Sensoren (2a, 2b) bestimmt. Das Auflösungsvermögen der äußeren Sensorik (1 a, 1 b, 2a, 2b) ist dabei so ausgelegt, dass der jeweils aktuell von dem weiteren Sensor 4 erfasste Messsektor 5 durch die äußere Sensorik (1 a, 1 b, 2a, 2b) eindeutig bestimmbar ist.

Die äußere Sensorik (1 a, 1 b, 2a, 2b) liefert somit einen Grobwert des absoluten Drehwinkels der Welle, der durch die hochauflösende Messung der inneren Sensorik, also durch das weitere Sensorrad 3 und den zugehörigen weiteren Sensor 4, verfeinert wird. Da das Sensorrad 3 direkt mit der Welle verbunden ist, ist der hochaufgelöste Winkelmesswert nicht durch mechanisches Spiel oder Formtoleranzen der Zahnkränze (8a, 8b, 9) verfälscht.

Geht man beispielhaft davon aus, dass die äußere Sensorik (1a, 1b, 2a, 2b) in der Lage ist, mit einer absoluten Genauigkeit von ± 2,5° zu messen, kann man die Winkelbreite der Messsektoren 5 der inneren Sensorik (3, 4) mit 5° so festlegen, dass die äußere Sensorik (1 a, 1 b, 2a, 2b) in der Lage ist, einen bestimmten Messsektor 5 genau zu bestimmen. Eine Aufteilung des Vollkreises in 5° breite Messsektoren ergibt, bei einer mit geringem Aufwand zu bewältigenden Auflösung von 10 Bit pro Messsektor, eine erreichbare Gesamtauflösung des Winkelsensors in der Größenordnung von 0,005°.

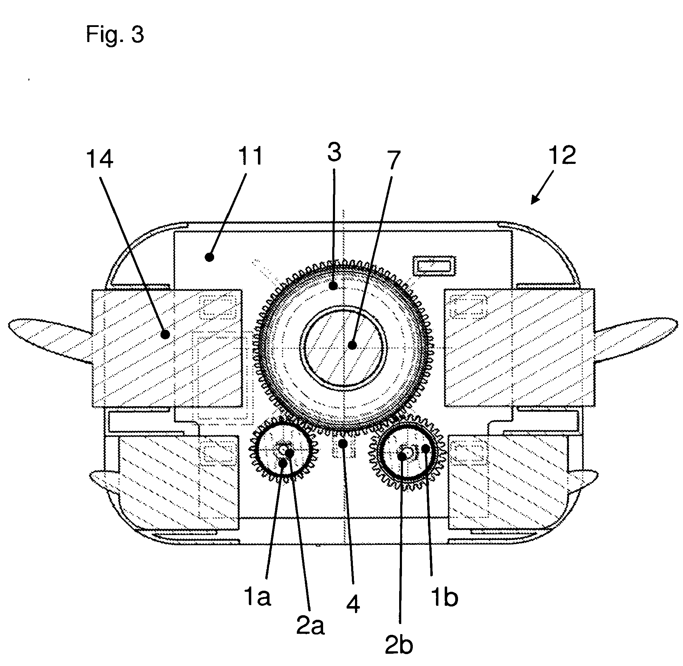

Ein derartiger Winkelsensor kann vorteilhaft als Lenkwinkelsensor in einem Fahrzeug verwendet werden. Die Figur 3 skizziert eine entsprechende Anordnung. Der Winkelsensor ist als Teil eines Lenksäulenmoduls 12 ausgeführt, welches direkt an der Lenksäule des Fahrzeugs angeordnet ist. Als Bestandteile des Lenksäulenmoduls 12 sind mehrere Schalthebel 14 erkennbar. Zwei Sensorräder (1 a, 1 b) sind drehbar auf einer Modulleiterplatte 11 angeordnet. Die Rückseite der Modulleiterplatte 11 trägt die Sensoren (2a, 2b, 4), die zur Erfassung der Position der Sensorräder (1 a, 1 b) geeignet sind, die Vorderseite trägt den Sensor (4), der zur Erfassung der Position des weiteren Sensorrades (3) dient.

Sind die Sensorräder (1 a, 1 b, 3), wie hier dargestellt, mit Magneten (1 a, 1 b) oder Magnetstrukturen, die die Messsektoren 5 des Sensorrades 3 ausbilden, versehen, so sind die Sensoren (2a, 2b, 4) vorteilhaft als Hallsensoren oder als magnetoresistive Sensoren ausführbar. In hier nicht näher beschriebenen alternativen Ausführungsformen können auch andere Messprinzipien vorteilhaft verwendet werden. So kann beispielsweise für die äußere Sensorik ein induktives und/oder für die innere Sensorik ein optisches Messverfahren vorgesehen sein.

Wesentlich ist, dass das zur inneren Sensorik (3, 4) gehörende weitere Sensorrad 3 ohne Vermittlung eines Getriebes mit der Lenkwelle 7 verbunden ist, wodurch eine hysteresefreie hochauflösende Winkelmessung möglich wird. Die durch das weitere Sensorrad 3 angetriebenen Sensorräder (1 a, 1 b) dürfen durchaus eine Hysterese aufweisen, da deren Genauigkeit lediglich ausreichen muss, um über mehrere Umdrehungen nach dem Nonius-Prinzip den aktuell durch den weiteren Sensor 4 erfassten Messsektor zu bestimmen.

Aufgrund der erforderlichen mechanischen Kopplung sind alle Sensorräder (1 a, 1 b, 3) hier als Zahnräder ausgebildet. Das weitere Sensorrad 3 kann dabei vorteilhaft als ein Magnetring 13, mit entlang des Umfangs angeordneten Messsektoren 5 ausgebildet sein, der mit einer thermoplastischen Umspritzung versehen ist, die den Zahnkranz 9 ausbildet. Als metallisches, keramisches oder hochgefülltes Thermoplast-Teil mit hoher Maßhaltigkeit kann der Magnetring als Stützstruktur für den Zahnkranz 9 verwendet werden, um die Verzahnungsqualität und Rundlaufgenauigkeit zu erhöhen.

Alternativ kann zur Ausbildung des weiteren Sensorrads 3 auch vorgesehen sein, dass der Magnetring 13 von einem duroplastischen Material umgeben ist. Das Sensorrad 3 kann auch insgesamt aus Metall bestehen, indem ein beispielsweise aus Aluminium oder Messing geformtes Zahnrad mit einem Magnetring verbunden ist.

### Bezugszeichen

- 1a, 1b: Sensorräder
- 2a, 2b: Sensoren
- 3: (weiteres) Sensorrad
- 4: (weiterer) Sensor
- 5: Messsektoren
- 6: Schaltungsträger
- 7: (Lenk-)Welle
- 8a, 8b: Zahnkränze
- 9: Zahnkranz
- 10a, 10b: Magnete
- 11: Modulleiterplatte
- 12: Lenksäulenmodul
- 13: Magnetring
- 14: Schalthebel

- (1a, 1b, 2a, 2b): äußere Sensorik
- (3,4): innere Sensorik

## Patentansprüche

1. Winkelsensor zur Ermittlung des absoluten Drehwinkels einer Welle (7) über mehrere Umdrehungen,
mit einer äußeren Sensorik (1a, 1b, 2a, 2b) mit mindestens einem Sensorrad (1a, 1b) und einem dem Sensorrad (1a, 1b) zugeordneten Sensor (2a, 2b) zur Bestimmung der Umdrehungszahl der Welle (7),
und mit einer inneren Sensorik (3, 4) mit einem direkt mit der Welle (7) verbundenen weiteren Sensorrad (3), das eine in Umfangsrichtung angeordnete Codierung aufweist, aus der ein weiterer Sensor (4) eine relative Winkelposition innerhalb einer Umdrehung der Welle (7) erfasst,
wobei das weitere Sensorrad (3) in Umfangsrichtung nebeneinander liegende Messsektoren (5) aufweist, und
wobei der weitere Sensor (4) die relative Winkelposition der Welle (7) bezüglich eines Messsektors (5) ermittelt,
wobei der absolute Drehwinkel der Welle (7) aus den Messwerten der inneren Sensorik (3, 4) und äußeren Sensorik (1a, 1b, 2a, 2b) bestimmbar ist,
**dadurch gekennzeichnet,**
**dass** die äußere Sensorik (1a, 1b, 2a, 2b) mehrere durch das weitere Sensorrad (3) angetriebene Sensorräder (1a, 1b) und Sensoren (2a, 2b) aufweist und den aktuell von dem weiteren Sensor (4) erfassten Messsektor (5) nach dem Noniusprinzip bestimmt.

2. Winkelsensor nach Anspruch 1, **dadurch gekennzeichnet, dass** die innere Sensorik (3, 4) nach einem optischen oder magnetischen Messprinzip funktioniert.

3. Winkelsensor nach Anspruch 1, **dadurch gekennzeichnet, dass** die äußere Sensorik (1 a, 1 b, 2a, 2b) nach einem induktiven oder magnetischen Messprinzip funktioniert.

4. Winkelsensor nach Anspruch 1, **dadurch gekennzeichnet, dass** die Sensoren (2a, 2b) der äußeren Sensorik (1a, 1b, 2a, 2b) und der Sensor (3) der inneren Sensorik (3, 4) auf einem einzigen Schaltungsträger (6, 11) angeordnet sind.

5. Winkelsensor nach Anspruch 1, **dadurch gekennzeichnet, dass** alle Sensorräder (1 a, 1 b, 3) als Zahnräder ausgebildet sind.

6. Winkelsensor nach Anspruch 5, **dadurch gekennzeichnet, dass** das weitere Sensorrad (3) als ein Magnetring (13) mit einer thermoplastischen Umspritzung ausgeführt ist, wobei die Umspritzung einen Zahnkranz (9) ausbildet.

7. Winkelsensor nach Anspruch 1, **dadurch gekennzeichnet, dass** das weitere Sensorrad (3) auf einer Welle (7) oder Hohlwelle angeordnet ist.

8. Winkelsensor nach Anspruch 1, **dadurch gekennzeichnet, dass** der Winkelsensor zur Erfassung des Lenkwinkels eines Fahrzeugs verwendet wird.

9. Winkelsensor nach Anspruch 1, **dadurch gekennzeichnet, dass** die Messsektoren (5) jeweils mindestes zwei Magnetpole aufweisen, und dass der weitere Sensor (4) ein Magnetfeldsensor ist, dessen Messwert von seiner Position relativ zu den Magnetpolen eines Messsektors (5) abhängt.

10. Winkelsensor nach Anspruch 9, **dadurch gekennzeichnet, dass** der weitere Sensor (4) einen analogen Messwert erfasst.

11. Winkelsensor nach Anspruch 10, **dadurch gekennzeichnet, dass** der weitere Sensor (4) oder eine dem weiteren Sensor (4) nachgeschaltete Vorrichtung den Analogwert in einen Digitalwert wandelt und dass der Digitalwert eine Auflösung zwischen 8 und 16 Bit aufweist.

## Claims

1. Angle sensor for determining the absolute angle of rotation of a shaft (7) over a plurality of rotations ,
having an outer sensor system (1a, 1b, 2a, 2b) with at least one sensor wheel (1a, 1b) and a sensor (2a, 2b) allocated to the sensor wheel (1a, 1b) for determining the number of rotations of the shaft (7),
and having an inner sensor system (3, 4) with a further sensor wheel (3) which is directly connected to the shaft (7) and has a coding disposed in the peripheral direction from which a further sensor (4) senses a relative angular position within a rotation of the shaft (7),
with the further sensor wheel (3) having measuring sectors (5) positioned adjacent to each other in the peripheral direction, and
with the further sensor (4) determining the relative angular position of the shaft (7) in relation to a measuring sector (5),
with the absolute angle of rotation of the shaft (7) being determinable from the measured values of the inner sensor system (3, 4) and the outer sensor system (1a, 1b, 2a, 2b),
**characterised in that**
the outer sensor system (1 a, 1 b, 2a, 2b) has a plurality of sensor wheels (1 a, 1 b) and sensors (2a, 2b) driven by the further sensor wheel (3), and determines the measuring sector (5) that is currently being sensed by the further sensor (4) according to the Nonius principle.

2. Angle sensor according to Claim 1, **characterised in that** the inner sensor system (3, 4) functions according to an optical or magnetic measuring principle.

3. Angle sensor according to Claim 1, **characterised in that** the outer sensor system (1a, 1b, 2a, 2b) functions according to an inductive or magnetic measuring principle.

4. Angle sensor according to Claim 1, **characterised in that** the sensors (2a, 2b) of the outer sensor system (1 a, 1 b, 2a, 2b) and the sensor (3) of the inner sensor system (3, 4) are located on a single circuit carrier (6, 11).

5. Angle sensor according to Claim 1, **characterised in that** all the sensor wheels (1 a, 1 b, 3) are designed as toothed wheels.

6. Angle sensor according to Claim 5, **characterised in that** the further sensor wheel (3) is executed as a magnetic ring (13) with a thermoplastic encapsulation, with the encapsulation forming a sprocket wheel (9).

7. Angle sensor according to Claim 1, **characterised in that** the further sensor wheel (3) is located on a shaft (7) or hollow shaft.

8. Angle sensor according to Claim 1, **characterised in that** the angle sensor is used for sensing the steering angle of a vehicle.

9. Angle sensor according to Claim 1, **characterised in that** each of the measuring sectors (5) has at least two magnetic poles and that the further sensor (4) is a magnetic field sensor whose measured value depends on its position in relation to the magnetic poles of a measuring sector (5).

10. Angle sensor according to Claim 9, **characterised in that** the further sensor (4) senses an analog measured value.

11. Angle sensor according to Claim 10, **characterised in that** the further sensor (4) or a device downstream from the further sensor (4) converts the analog value into a digital value and that the digital value has a resolution of between 8 and 16 bits.

## Revendications

1. Capteur d'angle pour la détection de l'angle de rotation absolu d'un arbre (7) sur plusieurs rotations,
avec un dispositif de détection extérieur (1 a, 1 b, 2a, 2b) comprenant au moins une roue de détection (1a, 1b) et un détecteur (2a, 2b), qui est associé à la roue de détection (1a, 1b) pour la détermination du nombre de rotations de l'arbre (7),
et avec un dispositif de détection intérieur (3, 4) comprenant une autre roue de détection (3) qui, directement reliée à l'arbre (7), présente un codage disposé dans la direction périphérique, à partir duquel un autre détecteur (4) saisie une position d'angle relative au sein d'une rotation de l'arbre (7),
sachant que) l'autre roue de détection (3) présente des secteurs de mesure (5) situés les uns à côté des autres, et
sachant que l'autre détecteur (4) détermine la position d'angle relative de l'arbre (7) en ce qui concerne un secteur de mesure (5),
l'angle de rotation absolu de l'arbre (7) pouvant être déterminé à partir des valeurs de mesure du dispositif de détection intérieur (3, 4) et du dispositif de détection extérieur (1a, 1b, 2a, 2b),
**caractérisé en ce que**
le dispositif de détection extérieur (1 a, 1 b, 2a, 2b) présente plusieurs roues de détection (1a, 1b), et détecteurs (2a, 2b) entraînés par l'autre roue de détection (3) et détermine selon le principe de Nonius le secteur de mesure (5) actuellement saisit par l'autre détecteur (4).

2. Capteur d'angle selon la revendication 1, **caractérisé en ce que** le dispositif de détection intérieur (3, 4) fonctionne selon un principe de mesure optique ou magnétique.

3. Capteur d'angle selon la revendication 1, **caractérisé en ce que** le dispositif de détection extérieur (1a, 1b, 2a, 2b) fonctionne selon un principe inductif ou magnétique.

4. Capteur d'angle selon la revendication 1, **caractérisé en ce que** les détecteurs (2a, 2b) du dispositif de détection extérieur (1a, 1b, 2a, 2b) et le détecteur (3) du dispositif de détection intérieur (3, 4) sont disposés sur un support de circuit unique (6, 11).

5. Capteur d'angle selon la revendication 1, **caractérisé en ce que** toutes les roues de détection (1a, 1b, 3) sont réalisées en forme de roues dentées,

6. Capteur d'angle selon la revendication 5, **caractérisé en ce que** l'autre roue de détection (3) est réalisée en forme de bague magnétique (13) enrobée de matière thermoplastique, sachant que l'enrobement thermoplastique forme une couronne dentée (9).

7. Capteur d'angle selon la revendication 1, **caractérisé en ce que** l'autre roue de détection (3) est disposée sur un arbre (7) ou sur un arbre creux.

8. Capteur d'angle selon la revendication 1, **caractérisé en ce que** ledit capteur d'angle est utilisé pour le captage de l'angle de braquage d'un véhicule.

9. Capteur d'angle selon la revendication 1, **caractérisé en ce que** les secteurs de mesure (5) présentent chacun deux pôles magnétiques et que l'autre détecteur (4) est un détecteur magnétique dont la valeur de mesure dépend de sa position relative par rapport-aux pôles magnétiques d'un secteur de mesure (5).

10. Capteur d'angle selon la revendication 9, **caractérisé en ce que** l'autre détecteur (4) capte une valeur de mesure analogique.

11. Capteur d'angle selon la revendication 10, **caractérisé en ce que** l'autre détecteur (4) ou un dispositif connecté en aval de l'autre détecteur (4) convertit la valeur analogique en une valeur numérique et que la valeur numérique présente une résolution située entre 8 et 16 Bits.
